# EUROPEAN PATENT APPLICATION

(11) **EP 4 545 815 A1**
(43) Date of publication of application: **30.04.2025**
(21) Application number: 23909922.9
(22) Date of filing: 30.11.2023
(51) Int. Cl.: F16C 11/04, H04M 1/02, G06F 1/16

(54) **ROTATING SHAFT MECHANISM AND ELECTRONIC DEVICE**

(30) Priority: 31.12.2022 CN 202211739538
(71) Applicant: Huawei Technologies Co., Ltd., Shenzhen, Guangdong 518129 (CN)
(72) Inventor: XIAO, Zhenlin, Shenzhen, Guangdong 518129 (CN); LI, Kaixu, Shenzhen, Guangdong 518129 (CN); ZHONG, Ding, Shenzhen, Guangdong 518129 (CN); FAN, Wen, Shenzhen, Guangdong 518129 (CN); GUO, Zhaoen, Shenzhen, Guangdong 518129 (CN)
(74) Representative: MERH-IP Matias Erny Reichl Hoffmann Patentanwälte PartG mbB
(86) International application number: PCT/CN2023/135447
(87) International publication number: WO 2024/139992

(57) **Abstract**

This application provides a hinge mechanism and an electronic device. The hinge mechanism includes a base and a hinge assembly. The hinge assembly includes a first rotating assembly and a second rotating assembly. The first rotating assembly includes a first housing fastening bracket and a first rotating element rotatably connected between the base and the first housing fastening bracket. The second rotating assembly includes a second housing fastening bracket and a second rotating element rotatably connected between the base and the second housing fastening bracket. The first housing fastening bracket has a first support surface, the second housing fastening bracket has a second support surface, and the base has a third support surface. When the hinge mechanism is flattened, the first support surface, the second support surface, and the third support surface form a flat support surface for supporting a flexible display; and when the hinge mechanism is folded, the first support surface, the third support surface, and the second support surface form a U-shaped support surface for supporting the flexible display, to provide good support for the flexible display when the hinge mechanism is folded or unfolded, and avoid pulling or arching of the flexible display.

## Description

### CROSS-REFERENCE TO RELATED APPLICATIONS

This application claims priority to Chinese Patent Application No. 202211739538.5, filed with the China National Intellectual Property Administration on December 31, 2022 and entitled "HINGE MECHANISM AND ELECTRONIC DEVICE", which is incorporated herein by reference in its entirety.

### TECHNICAL FIELD

This application relates to the field of electronic device technologies, and in particular, to a hinge mechanism and an electronic device.

### BACKGROUND

As flexible display technologies gradually mature, display manners of electronic devices are driven to change greatly. A mobile phone having a foldable flexible display, a tablet computer having a foldable flexible display, a wearable electronic device having a foldable flexible display, and the like are an important evolution direction of intelligent electronic devices in the future.

A hinge mechanism, as an important component for implementing a folding function of a foldable electronic device, has a feature of continuous foldability. The hinge mechanism may be configured to change a folding state of the electronic device, and may further provide sufficient support force for a flexible display of the electronic device in different folding states. However, because existing hinge mechanisms are complex in structure and mostly have chain structures, the flexible display is prone to pulling and compression, affecting reliability of an entire structure of the electronic device.

### SUMMARY

This application provides a hinge mechanism and an electronic device, so that good support is provided for a flexible display when the hinge mechanism is folded or unfolded, to avoid pulling or arching of the flexible display.

According to a first aspect, this application provides a hinge mechanism. The hinge mechanism may be used in a foldable electronic device, and a flexible display of the electronic device is connected to one side of the hinge mechanism. Specifically, the hinge mechanism includes a base and at least one hinge assembly. The hinge assembly may include a first rotating assembly and a second rotating assembly. The first rotating assembly and the second rotating assembly are disposed opposite to each other on two sides of the base. The first rotating assembly includes a first rotating element and a first housing fastening bracket. The first rotating element is located between the base and the first housing fastening bracket and is rotatably connected to the base and the first housing fastening bracket separately. The second rotating assembly includes a second rotating element and a second housing fastening bracket. The second rotating element is located between the base and the second housing fastening bracket and is rotatably connected to the base and the second housing fastening bracket separately. A side that is of the first housing fastening bracket and that faces the flexible display has a first support surface, a side that is of the second housing fastening bracket and that faces the flexible display has a second support surface, a side that is of the base and that faces the flexible display has a third support surface, and the first support surface, the second support surface, and the third support surface are separately connected to the flexible display.

When the hinge mechanism is in a flattened state, the first support surface, the second support surface, and the third support surface may form a flat support surface for supporting the flexible display, to avoid depression of the flexible display. When the hinge mechanism is in a folded state, the first support surface, the third support surface, and the second support surface may form a U-shaped support surface for supporting the flexible display, to avoid arching of the flexible display. In this way, when the hinge mechanism is folded or unfolded, the hinge mechanism can provide good support for the flexible display, thereby improving structural reliability of the electronic device.

In the hinge mechanism, the first housing fastening bracket rotates relative to the base by using the first rotating element. The first rotating element may specifically include a first arc-shaped rotating block and a second arc-shaped rotating block that are fastened to each other. Both a concave surface of the first arc-shaped rotating block and a concave surface of the second arc-shaped rotating block may be provided toward one side of the flexible display. A first arc-shaped guiding groove is provided on a side that is of the base and that faces the first rotating element. A second arc-shaped guiding groove is provided on a side that is of the first housing fastening bracket and that faces the first rotating element. Specifically, the first arc-shaped rotating block is accommodated in the first arc-shaped guiding groove, and slides in the first arc-shaped guiding groove to implement a rotatable connection between the first rotating element and the base; and the second arc-shaped rotating block is accommodated in the second arc-shaped guiding groove, and slides in the second arc-shaped guiding groove to implement a rotatable connection between the first rotating element and the first housing fastening bracket. The first arc-shaped rotating block and the first arc-shaped guiding groove have a first rotation center, the second arc-shaped rotating block and the second arc-shaped guiding groove have a second rotation center, and the first rotation center and the second rotation center do not overlap. Therefore, an axial phase difference between the first housing fastening bracket and the first rotating element can be implemented during rotation of the hinge mechanism, so that the first housing fastening bracket and the first rotating element telescopically move relative to the base.

Correspondingly, the second housing fastening bracket rotates relative to the base by using the second rotating element. The second rotating element may specifically include a third arc-shaped rotating block and a fourth arc-shaped rotating block that are fastened to each other. Both a concave surface of the third arc-shaped rotating block and a concave surface of the fourth arc-shaped rotating block are provided toward one side of the flexible display. A third arc-shaped guiding groove is provided on a side that is of the base and that faces the second rotating element. A fourth arc-shaped guiding groove is provided on a side that is of the second housing fastening bracket and that faces the second rotating element. Specifically, the third arc-shaped rotating block is accommodated in the third arc-shaped guiding groove, and slides in the third arc-shaped guiding groove to implement a rotatable connection between the second rotating element and the base; and the fourth arc-shaped rotating block is accommodated in the fourth arc-shaped guiding groove, and slides in the fourth arc-shaped guiding groove to implement a rotatable connection between the second rotating element and the second housing fastening bracket. The third arc-shaped rotating block and the third arc-shaped guiding groove have a third rotation center, the fourth arc-shaped rotating block and the fourth arc-shaped guiding groove have a fourth rotation center, and the third rotation center and the fourth rotation center do not overlap. Therefore, an axial phase difference between the second housing fastening bracket and the second rotating element can be implemented during rotation of the hinge mechanism, so that the second housing fastening bracket and the second rotating element can telescopically move relative to the base.

Therefore, the first housing fastening bracket and the first rotating element, and the second housing fastening bracket and the second rotating element may be telescopic relative to the base, so that the hinge mechanism in an unfolded state can stably support the flexible display of the electronic device, and the hinge mechanism in a closed state can form a support structure that meets a bending requirement of the flexible display. This can effectively reduce space occupied by the first rotating assembly and the second rotating assembly in a folding or unfolding process of the hinge mechanism, and is beneficial to implementing a miniaturization design of the hinge mechanism.

When the hinge mechanism is specifically disposed, in addition to the first housing fastening bracket, the second housing fastening bracket, and the base, the first rotating element and the second rotating element may provide support for the flexible display. Specifically, the first rotating element may further include a first body. The first arc-shaped rotating block and the second arc-shaped rotating block are disposed on a side that is of the first body and that is away from the flexible display. A side that is of the first body and that faces the flexible display has a first arc-shaped support surface. The first arc-shaped support surface protrudes toward the flexible display. Correspondingly, the second rotating element may further include a second body. The third arc-shaped rotating block and the fourth arc-shaped rotating block are disposed on a side that is of the second body and that is away from the flexible display. A side that is of the second body and that faces the flexible display has a second arc-shaped support surface. The second arc-shaped support surface protrudes toward the flexible display. When the hinge mechanism is in the flattened state, at least a part of the first arc-shaped support surface may be located in the flat support surface and abut against the flexible display, and at least a part of the second arc-shaped support surface may be located in the flat support surface and abut against the flexible display. When the hinge mechanism is in the folded state, the first support surface, the first arc-shaped support surface, the third support surface, the second arc-shaped support surface, and the second support surface form the U-shaped support surface. In this way, when the hinge mechanism is folded or flattened, five support surfaces, namely, the first support surface, the first arc-shaped support surface, the third support surface, the second arc-shaped support surface, and the second support surface, may jointly support the flexible display, to further enhance support for the flexible display.

In some technical solutions, the first support surface, the second support surface, and the third support surface may be planes. Alternatively, in some other technical solutions, the first support surface, the second support surface, and the third support surface may be arc surfaces. For example, in a specific technical solution, the first support surface may include a first plane and a first arc surface, the first arc surface is provided on a side that is of the first plane and that is close to the first rotating element, and the first arc surface may extend in a direction away from the flexible display. Similarly, the second support surface may include a second plane and a second arc surface, the second arc surface is provided on a side that is of the second plane and that is close to the second rotating element, and the second arc surface may extend in a direction away from the flexible display. Correspondingly, the third support surface may include a third plane, a third arc surface, and a fourth arc surface, and the third arc surface and the fourth arc surface are respectively located on two sides of the third plane. The third arc surface is provided close to the first rotating element, the fourth arc surface is provided close to the second rotating element, and the third arc surface and the fourth arc surface may separately extend in a direction away from the flexible display. In this technical solution, in a process in which the first housing fastening bracket and the second housing fastening bracket are folded or unfolded relative to each other, the first arc surface and the third arc surface may respectively abut against two sides of the first arc-shaped support surface, to implement smooth transition of the first support surface, the first arc-shaped support surface, and the third support surface; and the second arc surface and the fourth arc surface respectively abut against two sides of the second arc-shaped support surface, to implement smooth transition of the second support surface, the second arc-shaped support surface, and the third support surface. When the hinge mechanism is in the flattened state, the first plane, at least a part of the first arc-shaped support surface, the second plane, at least a part of the second arc-shaped support surface, and the third plane form the flat support surface; and when the hinge mechanism is in the folded state, the first plane, the first arc surface, the first arc-shaped support surface, the third arc surface, the third plane, the fourth arc surface, the second arc-shaped support surface, the second arc surface, and the second plane form the U-shaped support surface.

In some technical solutions of this application, the hinge assembly may further include a first sliding limiting assembly and a second sliding limiting assembly, to restrict rotation directions and rotation angles of the first housing fastening bracket and the second housing fastening bracket relative to the base. Specifically, the first sliding limiting assembly is connected between the first housing fastening bracket and the base, and the second sliding limiting assembly is connected between the second housing fastening bracket and the base. The first sliding limiting assembly includes a first limiting gear and a first limiting gear swing rod. The first limiting gear includes a first limiting gear shaft disposed on the base and a first limiting gear body sleeved on the first limiting gear shaft. The first limiting gear swing rod includes a first limiting sliding block and a first limiting gear part. The first housing fastening bracket is provided with a first limiting chute extending in a direction away from the base. The first limiting sliding block is accommodated in the first limiting chute. The first limiting gear part is disposed at an end that is of the first limiting sliding block and that faces the base, and meshes with the first limiting gear body. The first limiting sliding block slides in the first limiting chute to restrict a rotation direction of the first rotating assembly relative to the base. The second sliding limiting assembly includes a second limiting gear and a second limiting gear swing rod. The second limiting gear includes a second limiting gear shaft disposed on the base and a second limiting gear body sleeved on the second limiting gear shaft. The second limiting gear body meshes with the first limiting gear body. The second limiting gear swing rod includes a second limiting sliding block and a second limiting gear part. The second housing fastening bracket is provided with a second limiting chute extending in a direction away from the base. The second limiting sliding block is accommodated in the second limiting chute. The second limiting gear part is disposed at an end that is of the second limiting sliding block and that faces the base, and meshes with the second limiting gear body. The second limiting sliding block slides in the second limiting chute to restrict a rotation direction of the second rotating assembly relative to the base. In a process in which the first housing fastening bracket and the second housing fastening bracket are folded or unfolded relative to each other, the first limiting gear body and the second limiting gear body can rotate synchronously, so that the first limiting gear swing rod and the second limiting gear swing rod are synchronously driven to slide along the first limiting chute and the second limiting chute respectively, to implement synchronous opening and closing of the hinge mechanism, and make the hinge mechanism more stable in a folding or unfolding process.

In some optional technical solutions, the hinge assembly may further include a first damping assembly and a second damping assembly. The first damping assembly includes a first spring, a first moving shaft, and a first roller. One end of the first spring is fastened to the first housing fastening bracket, and the other end is connected to the first moving shaft. The first roller is sleeved on the first moving shaft and may rotate around the first moving shaft. The first limiting sliding block is provided with a first limiting protrusion, and the first limiting protrusion abuts against a peripheral side of the first roller. When the first limiting sliding block slides in the first limiting chute, the first limiting protrusion pushes the first roller to rotate, and drives the first moving shaft to compress the first spring, so that the first spring generates first elastic force, and sliding of the first limiting sliding block is dampened by using the first elastic force, to provide a buffer function for sliding of the first limiting sliding block, so as to cause the first limiting sliding block to slide more smoothly in the first limiting chute. Similarly, the second damping assembly includes a second spring, a second moving shaft, and a second roller. One end of the second spring is fastened to the second housing fastening bracket, and the other end is connected to the second moving shaft. The second roller is sleeved on the second moving shaft and may rotate around the second moving shaft. The second limiting sliding block is provided with a second limiting protrusion, and the second limiting protrusion abuts against a peripheral side of the second roller. When the second limiting sliding block slides in the second limiting chute, the second limiting protrusion pushes the second roller to rotate, and drives the second moving shaft to compress the second spring, so that the second spring generates second elastic force, and sliding of the second limiting sliding block is dampened by using the second elastic force, to provide a buffer function for sliding of the second limiting sliding block, so as to cause the second limiting sliding block to slide more smoothly in the second limiting chute.

In some other optional technical solutions, the damping assembly may be alternatively implemented by using another structure. Specifically, the hinge assembly may further include a third damping assembly and a fourth damping assembly. The third damping assembly includes a third spring, a first damping cam, and a second damping cam. The third spring is disposed on the base. The first damping cam is disposed on one end of the third spring. The second damping cam is fastened to the first limiting gear part and meshes with the first damping cam. When the first limiting sliding block slides in the first limiting chute, the second damping cam pushes the first damping cam and compresses the third spring, so that the third spring generates third elastic force, and sliding of the first limiting sliding block is dampened by using the third elastic force, to provide a buffer function for sliding of the first limiting sliding block. Similarly, the fourth damping assembly includes a fourth spring, a third damping cam, and a fourth damping cam. The fourth spring is disposed on the base. The third damping cam is disposed on one end of the fourth spring. The fourth damping cam is fastened to the second limiting gear part and meshes with the third damping cam. When the second limiting sliding block slides in the second limiting chute, the fourth damping cam pushes the third damping cam and compresses the fourth spring, so that the fourth spring generates fourth elastic force, and sliding of the second limiting sliding block is dampened by using the fourth elastic force, to provide a buffer function for sliding of the second limiting sliding block.

In this application, in some optional technical solutions, the hinge mechanism may further include a first flexible backplane, a first backplane support assembly, and a second backplane support assembly. The first flexible backplane shields the base and the hinge assembly by using the first backplane support assembly and the second backplane support assembly. Specifically, the first backplane support assembly includes a first sliding block and a fifth arc-shaped rotating block that are fastened to each other, where the first sliding block is disposed close to the first housing fastening bracket, the fifth arc-shaped rotating block is disposed close to the base, and a concave surface of the fifth arc-shaped rotating block is provided away from the flexible display. The second backplane support assembly includes a second sliding block and a sixth arc-shaped rotating block that are fastened to each other, where the second sliding block is disposed close to the second housing fastening bracket, the sixth arc-shaped rotating block is disposed close to the base, and a concave surface of the sixth arc-shaped rotating block is provided away from the flexible display. In addition, a first guiding groove is provided on a side that is of the first housing fastening bracket and that is close to the first backplane support assembly, an end that is of the first guiding groove and that is away from the base extends along the flexible display, a second guiding groove is provided on a side that is of the second housing fastening bracket and that is close to the second backplane support assembly, an end that is of the second guiding groove and that is away from the base extends along the flexible display, a fifth arc-shaped guiding groove is provided on a side that is of the base and that is close to the first backplane support assembly, and a sixth arc-shaped guiding groove is provided on a side that is of the base and that is close to the second backplane support assembly. In this technical solution, the first sliding block is accommodated in the first guiding groove, and slides in the first guiding groove to implement a sliding connection between the first backplane support assembly and the first housing fastening bracket. The fifth arc-shaped rotating block is accommodated in the fifth arc-shaped guiding groove, and slides in the fifth arc-shaped guiding groove to implement a rotatable connection between the first backplane support assembly and the base. The second sliding block is accommodated in the second guiding groove, and slides in the second guiding groove to implement a sliding connection between the second backplane support assembly and the second housing fastening bracket. The sixth arc-shaped rotating block is accommodated in the sixth arc-shaped guiding groove, and slides in the sixth arc-shaped guiding groove to implement a rotatable connection between the second backplane support assembly and the base. The first flexible backplane is disposed between the first housing fastening bracket and the second housing fastening bracket, and covers the base, the first rotating assembly, the second rotating assembly, the first backplane support assembly, and the second backplane support assembly. The first backplane support assembly and the second backplane support assembly are separately connected to the first flexible backplane. When the hinge mechanism is in the flattened state, the first flexible backplane, a surface of a side that is of the first housing fastening bracket and that is away from the flexible display, and a surface of a side that is of the second housing fastening bracket and that is away from the flexible display may jointly form an appearance surface, to implement appearance integrity and integrity. A first accommodating cavity is further provided on a side that is of the first housing fastening bracket and that is close to the first flexible backplane, and a second accommodating cavity is provided on a side that is of the second housing fastening bracket and that is close to the first flexible backplane. Therefore, in a process in which the first housing fastening bracket and the second housing fastening bracket are folded relative to each other, the first sliding block slides in the first guiding groove in a direction away from the base, the fifth arc-shaped rotating block slides in the fifth arc-shaped guiding groove in a direction away from the base, the second sliding block slides in the second guiding groove in a direction away from the base, and the sixth arc-shaped rotating block slides in the sixth arc-shaped guiding groove in a direction away from the base, so that the first flexible backplane is folded and two ends of the first flexible backplane may respectively extend into the first accommodating cavity and the second accommodating cavity, to accommodate the first flexible backplane.

In some technical solutions, the first backplane support assembly may further include a first support plate. The first sliding block and the fifth arc-shaped rotating block are disposed on a side that is of the first support plate and that faces the flexible display. The first flexible backplane is connected to a side that is of the first support plate and that is away from the flexible display. The second backplane support assembly may further include a second support plate. The second sliding block and the sixth arc-shaped rotating block are disposed on a side that is of the second support plate and that faces the flexible display. The first flexible backplane is connected to a side that is of the second support plate and that is away from the flexible display. When the first flexible backplane is bent, a surface that is of the first flexible backplane and that is away from the base is closer to a curvature center than a surface that is of the first flexible backplane and that faces the base, so that pulling force exerted on the surface that is of the first flexible backplane and that faces the base is greater than pulling force exerted on the surface that is of the first flexible backplane and that is away from the base. A blind hole structure is provided on a surface of a side that is of the first flexible backplane and that faces the flexible display. The blind hole structure is located between the first support plate and the second support plate, so that surface stress distribution of the first flexible backplane can be improved, and bending resistance of the first flexible backplane can be improved.

In some other optional technical solutions, the backplane support assembly may alternatively be implemented in another manner. Specifically, the hinge mechanism may further include a second flexible backplane, a third backplane support assembly, and a fourth backplane support assembly. The third backplane support assembly includes a third rotating gear and a third rotating gear swing rod, where the third rotating gear includes a third rotating gear shaft disposed on the base and a third rotating gear body sleeved on the third rotating gear shaft. The third rotating gear swing rod includes a third swing rod sliding block and a third swing rod gear part. A third guiding groove is provided on a side that is of the first housing fastening bracket and that faces the third backplane support assembly, and an end that is of the third guiding groove and that is away from the base extends along the flexible display. The third swing rod sliding block is accommodated in the third guiding groove. The third swing rod gear part is disposed at an end that is of the third swing rod sliding block and that faces the base, and meshes with the third rotating gear body. The fourth backplane support assembly includes a fourth rotating gear and a fourth rotating gear swing rod, where the fourth rotating gear includes a fourth rotating gear shaft disposed on the base and a fourth rotating gear body sleeved on the fourth rotating gear shaft. The fourth rotating gear swing rod includes a fourth swing rod sliding block and a fourth swing rod gear part. A fourth guiding groove is provided on a side that is of the second housing fastening bracket and that faces the fourth backplane support assembly, and an end that is of the fourth guiding groove and that is away from the base extends along the flexible display. The fourth swing rod sliding block is accommodated in the fourth guiding groove. The fourth swing rod gear part is disposed at an end that is of the fourth swing rod sliding block and that faces the base, and meshes with the fourth rotating gear body. The second flexible backplane is disposed between the first housing fastening bracket and the second housing fastening bracket, and covers the base, the first rotating assembly, the second rotating assembly, the third backplane support assembly, and the fourth backplane support assembly. The third backplane support assembly and the fourth backplane support assembly are separately connected to the second flexible backplane. A third accommodating cavity is further provided on a side that is of the first housing fastening bracket and that is close to the second flexible backplane, and a fourth accommodating cavity is provided on a side that is of the second housing fastening bracket and that is close to the second flexible backplane. In a process in which the first housing fastening bracket and the second housing fastening bracket are folded relative to each other, the third swing rod sliding block slides in the third guiding groove in a direction away from the base, and the fourth swing rod sliding block slides in the fourth guiding groove in a direction away from the base, so that the second flexible backplane is folded, and two ends of the second flexible backplane respectively extend into the third accommodating cavity and the fourth accommodating cavity.

According to a second aspect, this application provides an electronic device. The electronic device includes a flexible display and the hinge mechanism in the first aspect. Specifically, the flexible display is disposed on one side of the hinge mechanism, and is connected to the first support surface, the second support surface, and the third support surface.

When the electronic device is folded or unfolded, because a first rotation center and a second rotation center of the hinge mechanism do not overlap, an axial phase difference between a housing fastening bracket and a rotating element disposed on a same side may be implemented in a rotation process of the electronic device, so that the housing fastening bracket and the rotating element telescopically move relative to the base. In this way, the hinge mechanism in an unfolded state can smoothly support the flexible display, and the hinge mechanism in a closed state can form a support structure that meets a bending requirement of the flexible display, to avoid pulling or arching of the flexible display, and therefore improve structural reliability of the electronic device. When the electronic device is in a flattened state, the first support surface, the second support surface, and the third support surface may form a flat support surface for supporting the flexible display, to avoid depression of the flexible display. When the electronic device is in a folded state, the first support surface, the third support surface, and the second support surface may form a U-shaped support surface for supporting the flexible display, to avoid arching of the flexible display. In this way, when the electronic device is folded or unfolded, the hinge mechanism can provide good support for the flexible display, thereby improving structural reliability of the electronic device.

### BRIEF DESCRIPTION OF DRAWINGS

FIG. 1 is a three-dimensional assembly diagram of an electronic device in an unfolded state according to an embodiment of this application;
FIG. 2 is a sectional view of the electronic device in FIG. 1 in an A-A direction;
FIG. 3 is a three-dimensional assembly diagram of the electronic device in FIG. 1 in a folded state;
FIG. 4 is a sectional view of the electronic device in FIG. 3 in a B-B direction;
FIG. 5 is a diagram of a structure of a hinge mechanism according to an embodiment of this application;
FIG. 6 is a diagram of a structure of a hinge assembly according to an embodiment of this application;
FIG. 7 is a side view of the hinge assembly in FIG. 6;
FIG. 8 is another side view of the hinge assembly in FIG. 6;
FIG. 9 is a sectional view of a hinge mechanism in FIG. 8 in a C-C direction;
FIG. 10 is a diagram of a motion principle of a hinge assembly in FIG. 9;
FIG. 11 is a diagram of the hinge mechanism in FIG. 9 in a closed state;
FIG. 12 is a diagram of a motion principle of a hinge assembly in FIG. 11;
FIG. 13 is a diagram of a structure of a first rotating element according to an embodiment of this application;
FIG. 14 is a diagram of another structure of a hinge assembly according to an embodiment of this application;
FIG. 15 is a diagram of another structure of a first rotating element according to an embodiment of this application;
FIG. 16 is a diagram of a part of the hinge mechanism in FIG. 9;
FIG. 17 is a diagram of another structure of a hinge assembly according to an embodiment of this application;
FIG. 18 is a diagram of a part of a hinge mechanism in FIG. 17;
FIG. 19 is a diagram of another structure of a hinge assembly according to an embodiment of this application;
FIG. 20 is a diagram of another structure of a hinge assembly according to an embodiment of this application;
FIG. 21 is a diagram of the hinge assembly in FIG. 20 in a closed state;
FIG. 22 is a diagram of another structure of a hinge assembly according to an embodiment of this application; and
FIG. 23 is a diagram of the hinge assembly in FIG. 22 in a closed state.

### Reference numerals:

10: electronic device; 11: hinge mechanism; 12: flexible display;
13: first housing; 14: second housing; 110: base;
1101a: first arc-shaped guiding groove; 1102a: fifth arc-shaped guiding groove; 1102b: sixth arc-shaped guiding groove;
111: hinge assembly; 112a: first rotating assembly; 112b: second rotating assembly;
113a: first rotating element; 113b: second rotating element; 1131a: first body;
1132a: first arc-shaped rotating block; 1133a: second arc-shaped rotating block; 114a: first housing fastening bracket;
114b: second housing fastening bracket; 1141a: second arc-shaped guiding groove; 1142a: first limiting chute;
1142b: second limiting chute; 1143a: first guiding groove; 1143b: second guiding groove;
1144a: first accommodating cavity; 1144b: second accommodating cavity; 1145a: third guiding groove;
1145b: fourth guiding groove; 1146a: third accommodating cavity; 1146b: fourth accommodating cavity;
115a: first sliding limiting assembly; 115b: second sliding limiting assembly; 1151a: first limiting gear;
1151b: second limiting gear; 1152a: first limiting gear swing rod; 1152b: second limiting gear swing rod;
1153a: first limiting gear shaft; 1153b: second limiting gear shaft; 1154a: first limiting gear body;
1154b: second limiting gear body; 1155a: first limiting sliding block; 1155b: second limiting sliding block;
1156a: first limiting gear part; 1156b: second limiting gear part; 1157a: first limiting protrusion;
1157b: second limiting protrusion; 116a: first damping assembly; 116b: second damping assembly;
1161a: first spring; 1161b: second spring; 1162a: first moving shaft;
1162b: second moving shaft; 1163a: first roller; 1163b: second roller;
117a: third damping assembly; 117b: fourth damping assembly; 1171a: third spring;
1171b: fourth spring; 1172a: first damping cam; 1172b: third damping cam;
1173a: second damping cam; 1173b: fourth damping cam; 118a: first backplane support assembly;
118b: second backplane support assembly; 118c: third backplane support assembly; 118d: fourth backplane support assembly;
1181a: first support plate; 1181b: second support plate; 1182a: fifth arc-shaped rotating block;
1182b: sixth arc-shaped rotating block; 1183a: first sliding block; 1183b: second sliding block;
1184a: third rotating gear; 1184b: fourth rotating gear; 1185a: third rotating gear swing rod;
1185b: fourth rotating gear swing rod; 1186a: third rotating gear shaft; 1186b: fourth rotating gear shaft;
1187a: third rotating gear body; 1187b: fourth rotating gear body; 1188a: third swing rod sliding block;
1188b: fourth swing rod sliding block; 1189a: third swing rod gear part; 1189b: fourth swing rod gear part;
119: flexible backplane; 1191: blind hole structure.

### DESCRIPTION OF EMBODIMENTS

To make the objectives, technical solutions, and advantages of this application clearer, the following further describes this application in detail with reference to the accompanying drawings.

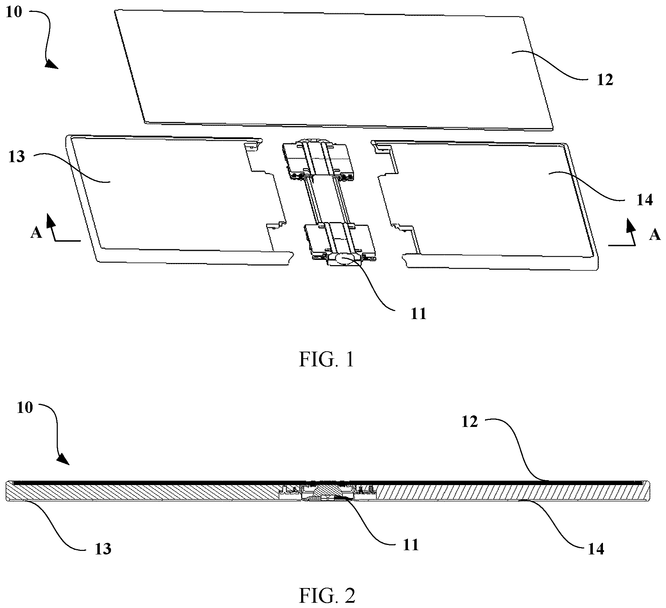

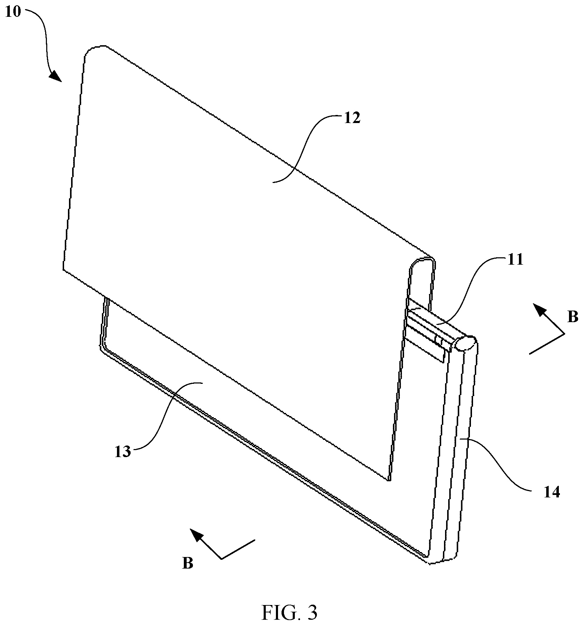

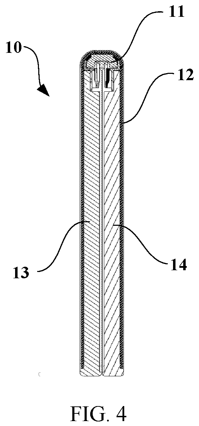

For ease of understanding a hinge mechanism provided in embodiments of this application, the following describes an application scenario of the hinge mechanism. The hinge mechanism may be used in, but is not limited to, a foldable electronic device such as a mobile phone, an intelligent wearable device, a tablet computer, or a notebook computer. When a hinge mechanism provided in embodiments of this application is used in an electronic device, refer to FIG. 1 to FIG. 4. FIG. 1 is a three-dimensional assembly diagram of an electronic device in an unfolded state according to an embodiment of this application. FIG. 2 is a sectional view of the electronic device in FIG. 1 in an A-A direction. FIG. 3 is a three-dimensional assembly diagram of the electronic device in FIG. 1 in a folded state. FIG. 4 is a sectional view of the electronic device in FIG. 3 in a B-B direction. An electronic device 10 provided in this application may be an outward-folding electronic device. The electronic device 10 may include a flexible display 12, a first housing 13, and a second housing 14 in addition to a hinge mechanism 11. The first housing 13 and the second housing 14 are disposed on two sides of the hinge mechanism 11, and may rotate around the hinge mechanism 11. When being used, the electronic device 10 may be folded and unfolded according to different usage scenarios. As shown in FIG. 1 and FIG. 2, the electronic device 10 is in the unfolded state. The flexible display 12 is disposed on one side of the hinge mechanism 11, the first housing 13, and the second housing 14, and is connected to the hinge mechanism 11, the first housing 13, and the second housing 14 separately. In this case, an outer surface that is of the first housing 13 and that is away from the flexible display 12 and an outer surface that is of the second housing 14 and that is away from the flexible display 12 may be jointly used as an appearance surface of the electronic device 10. As shown in FIG. 3 and FIG. 4, the electronic device 10 is in a folded state. The first housing 13 and the second housing 14 are disposed opposite to each other, and the flexible display 12 may be used as both a display surface of the electronic device 10 and an appearance surface of the electronic device 10. It may be understood that a process in which the electronic device 10 changes from the unfolded state shown in FIG. 1 to the folded state shown in FIG. 3, or from the folded state shown in FIG. 3 to the unfolded state shown in FIG. 1 is a process in which the first housing 13 and the second housing 14 rotate around the hinge mechanism 11. In this process, the flexible display 12 is bent or flattened with the first housing 13 and the second housing 14.

In some current foldable electronic devices, when the first housing 13 and the second housing 14 rotate around a hinge mechanism, the hinge mechanism cannot meet a bending support requirement of a flexible display, which may cause the flexible display to be compressed or pulled. In this case, after a plurality of folding operations are performed on the electronic device, the flexible display is prone to damage, which mostly occurs in a foldable part of the flexible display.

Therefore, a rotation structure of a hinge mechanism, as a key functional component in a foldable electronic device, may be designed, so that the hinge mechanism supports a foldable part of a flexible display. The hinge mechanism 11 provided in this application is intended to resolve the foregoing problem, so that the hinge mechanism 11 in an unfolded state can stably support the flexible display 12, and the hinge mechanism 11 in a closed state can form a support structure that can meet a bending requirement of the flexible display 12, to avoid pulling or arching of the flexible display 12, and therefore improve structural reliability of the electronic device 10.

It should be noted that the terms used in the following embodiments are only for a purpose of describing specific embodiments, but are not intended to limit this application. The terms "one", "a", "the", "the foregoing", and "this" of singular forms used in this specification and the appended claims of this application are also intended to include expressions such as "one or more", unless otherwise specified in the context clearly.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

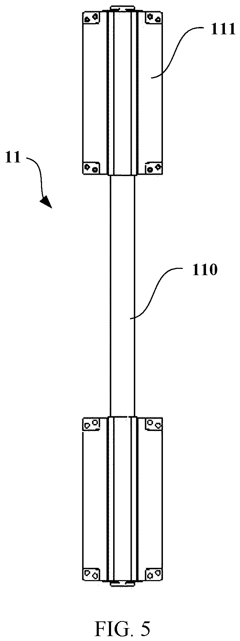

FIG. 5 is a diagram of a structure of a hinge mechanism according to an embodiment of this application. As shown in FIG. 5, the hinge mechanism 11 may specifically include a base 110 and at least one hinge assembly 111. In this application, a specific quantity of hinge assemblies 111 is not limited, for example, may be 1, 2, 3, 5, or the like. As shown in FIG. 5, in an optional embodiment, the hinge mechanism 11 may include two hinge assemblies 111. The two hinge assemblies 111 are respectively disposed at two ends of the base 110 to form an I-shaped structure, which is conducive to simplifying a structure of the hinge mechanism 11 and can provide stable rotation.

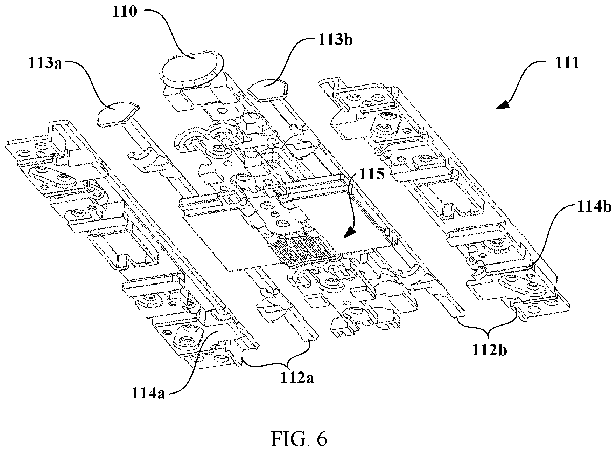

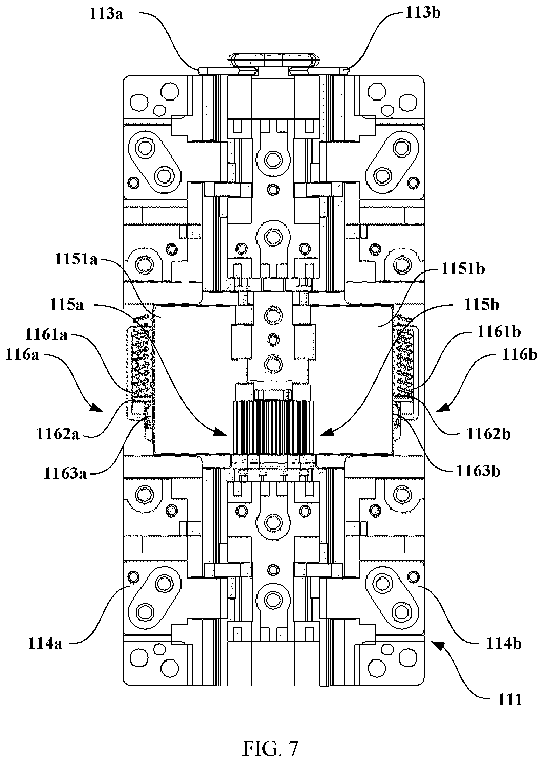

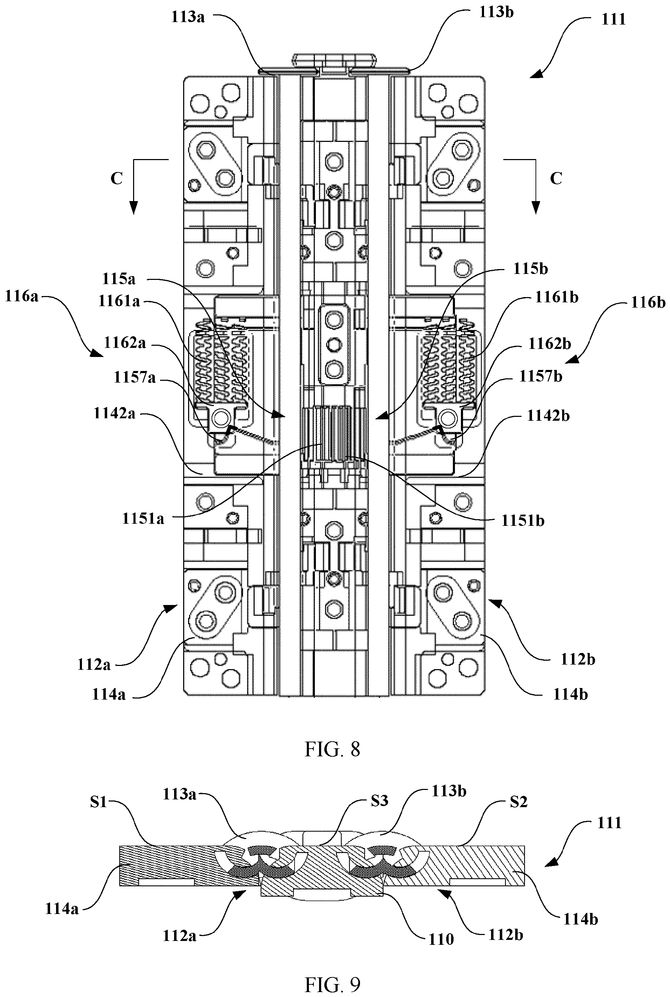

FIG. 6 is a diagram of a structure of a hinge assembly according to an embodiment of this application. FIG. 7 is a side view of the hinge assembly in FIG. 6. As shown in FIG. 6 and FIG. 7, the hinge assembly 111 may include a first rotating assembly 112a and a second rotating assembly 112b, and the first rotating assembly 112a and the second rotating assembly 112b are oppositely disposed on two sides of the base 110. FIG. 8 is another side view of the hinge assembly in FIG. 6. FIG. 9 is a sectional view of a hinge mechanism in FIG. 8 in a C-C direction. As shown in FIG. 8 and FIG. 9, the first rotating assembly 112a may include a first rotating element 113a and a first housing fastening bracket 114a. The first rotating element 113a may be disposed between the first housing fastening bracket 114a and the base 110, and the first rotating element 113a is rotatably connected to the base 110 and the first housing fastening bracket 114a. A side that is of the first housing fastening bracket 114a and that faces the flexible display 12 has a first support surface S1. The second rotating assembly 112b may include a second rotating element 113b and a second housing fastening bracket 114b. The second rotating element 113b may be disposed between the second housing fastening bracket 114b and the base 110, and the second rotating element 113b is rotatably connected to the base 110 and the second housing fastening bracket 114b. The flexible display 12 is disposed on one side of the hinge mechanism 11, and the first housing fastening bracket 114a, the second housing fastening bracket 114b, and the base 110 are separately connected to the flexible display 12. A side that is of the second housing fastening bracket 114b and that faces the flexible display 12 has a second support surface S2. A side that is of the base 110 and that faces the flexible display 12 has a third support surface S3. The first support surface S1, the second support surface S2, and the third support surface S3 are separately connected to the flexible display 12. When the hinge mechanism 11 is in a flattened state, the first support surface S1, the second support surface S2, and the third support surface S3 may form a flat support surface for supporting the flexible display 12, to avoid depression of the flexible display 12. When the hinge mechanism 11 is in a folded state, the first support surface S1, the second support surface S2, and the third support surface S3 may form a U-shaped support surface for supporting the flexible display 12, to avoid arching of the flexible display 12. In this way, when the hinge mechanism 11 is folded or unfolded, the hinge mechanism 11 can provide good support for the flexible display 12, thereby improving structural reliability of the electronic device 10.

It should be noted that when the hinge mechanism 11 is in the folded state, the first support surface S1 and the third support surface S3 are disposed opposite to each other, and the U-shaped support surface formed by the first support surface S1, the second support surface S2, and the third support surface S3 may meet a bending requirement of the flexible display 12. In this application, a shape of a support surface formed by the first support surface S1, the second support surface S2, and the third support surface S3 may alternatively be an ellipse or an arc. A specific shape may be designed based on a bending shape of the flexible display 12.

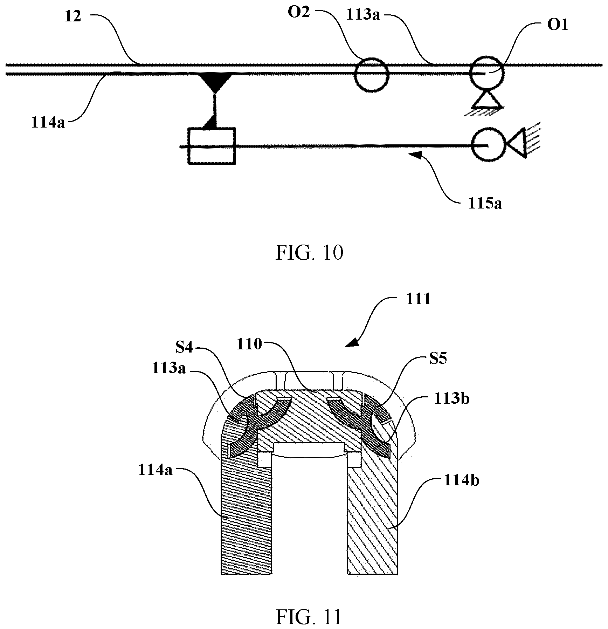

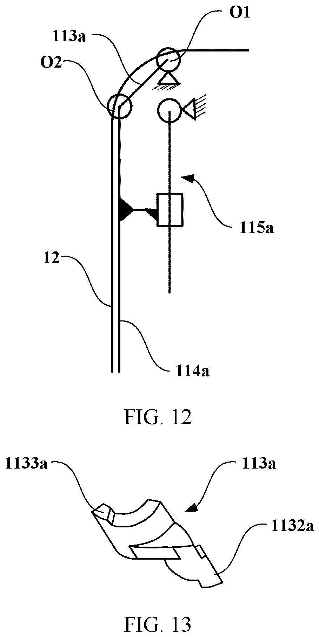

FIG. 10 is a diagram of a motion principle of a hinge assembly in FIG. 9. When the hinge mechanism 11 is in the unfolded state, as shown in FIG. 10, the first rotating assembly 112a is used as an example. The first rotating element 113a and the base 110 have a first rotation center O1, the first rotating element 113a and the first housing fastening bracket 114a have a second rotation center O2, and the first rotation center O1 and the second rotation center O2 do not overlap. FIG. 11 is a diagram of the hinge mechanism in FIG. 9 in a closed state. FIG. 12 is a diagram of a motion principle of a hinge assembly in FIG. 11. As shown in FIG. 11 and FIG. 12, the hinge mechanism 11 is in the closed state. In this case, compared with the unfolded state, in the closed state, a position of the first rotation center O1 remains unchanged, and a position of the second rotation center O2 is shifted. In a process in which the hinge mechanism 11 changes from the unfolded state shown in FIG. 9 to the folded state shown in FIG. 11, or from the folded state shown in FIG. 11 to the unfolded state shown in FIG. 9, because the first rotation center O1 and the second rotation center O2 do not overlap, an axial phase difference between the first housing fastening bracket 114a and the first rotating element 113a that are disposed on a same side may be implemented during rotation of the hinge mechanism 11, so that the first housing fastening bracket 114a and the first rotating element 113a may be telescopically moved relative to the base 110. Similarly, the second rotating element 113b and the base 110 have a third rotation center, the second rotating element 113b and the second housing fastening bracket 114b have a fourth rotation center, and the third rotation center and the fourth rotation center do not overlap. In view of this, an axial phase difference between the second housing fastening bracket 114b and the second rotating element 113b that are disposed on a same side is implemented during rotation of the hinge mechanism 11, so that the second housing fastening bracket 114b and the second rotating element 113b may be telescopically moved relative to the base 110. Therefore, in a process in which the hinge mechanism 11 is folded or unfolded, a length of a constant-length layer of the flexible display 12 can be fitted, to avoid pulling or compression of the flexible display 12. In this way, the hinge mechanism 11 in the unfolded state can smoothly support the flexible display 12 of the electronic device 10, and the hinge mechanism 11 in the closed state can form the support structure that meets the bending requirement of the flexible display 12. In addition, when the hinge mechanism 11 is folded or unfolded, the hinge mechanism 11 supports a foldable part of the flexible display 12 in the unfolded state shown in FIG. 9 and the folded state shown in FIG. 11, to avoid pulling or arching of the flexible display 12, and therefore improve structural reliability of the electronic device 10.

In this application, a manner in which the first rotating element 113a is rotatably connected to the base 110, the first rotating element 113a is rotatably connected to the first housing fastening bracket 114a, the second rotating element 113b is rotatably connected to the base 110, and the second rotating element 113b is rotatably connected to the second housing fastening bracket 114b is not specifically limited. In this application, because the first rotating assembly 112a and the second rotating assembly 112b are symmetrically disposed relative to the base 110, the following uses the first rotating assembly 112a as an example to describe structures of the first rotating assembly 112a and the second rotating assembly 112b.

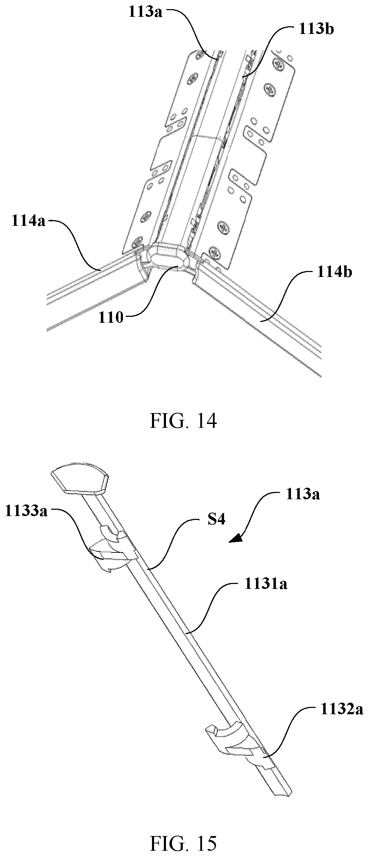

FIG. 13 is a diagram of a structure of a first rotating element according to an embodiment of this application. FIG. 14 is a diagram of another structure of a hinge assembly according to an embodiment of this application. As shown in FIG. 13 and FIG. 14, the first rotating element 113a may include a first arc-shaped rotating block 1132a and a second arc-shaped rotating block 1133a that are fastened to each other. Both a concave surface of the first arc-shaped rotating block 1132a and a concave surface of the second arc-shaped rotating block 1133a may be provided toward one side of the flexible display 12. The first arc-shaped rotating block 1132a is disposed close to the base 110, and the second arc-shaped rotating block 1133a is disposed close to the first housing fastening bracket 114a. A first arc-shaped guiding groove 1101a is provided on a side that is of the base 110 and that faces the first rotating element 113a. The first arc-shaped rotating block 1132a may be accommodated in the first arc-shaped guiding groove 1101a, and slide in the first arc-shaped guiding groove 1101a to implement a rotatable connection between the first rotating element 113a and the base 110. A second arc-shaped guiding groove 1141a is provided on a side that is of the first housing fastening bracket 114a and that faces the first rotating element 113a. The second arc-shaped rotating block 1133a may be accommodated in the second arc-shaped guiding groove 1141a, and slide in the second arc-shaped guiding groove 1141a to implement a rotatable connection between the first rotating element 113a and the first housing fastening bracket 114a. In this way, the first arc-shaped rotating block 1132a is accommodated in the first arc-shaped guiding groove 1101a, the second arc-shaped rotating block 1133a is accommodated in the second arc-shaped guiding groove 1141a, the first arc-shaped rotating block 1132a rotates along the first arc-shaped guiding groove 1101a, and the second arc-shaped rotating block 1133a rotates along the second arc-shaped guiding groove 1141a, to implement a rotatable connection among the base 110, the first rotating element 113a, and the first housing fastening bracket 114a, so that the base 110 and the first housing fastening bracket 114a is rotatably connected to the first rotating element 113a through a virtual axis. This effectively reduces space occupied by the first rotating assembly 112a when the hinge mechanism 11 is folded or unfolded, and facilitates a miniaturization design of the hinge mechanism 11. Specifically, when the hinge mechanism 11 is folded, the first arc-shaped rotating block 1132a slides into the first arc-shaped guiding groove 1101a, and the second arc-shaped rotating block 1133a slides into the second arc-shaped guiding groove 1141a; and when the hinge mechanism 11 is unfolded, the first arc-shaped rotating block 1132a slides out of the first arc-shaped guiding groove 1101a in a first direction, and the second arc-shaped rotating block 1133a slides out of the second arc-shaped guiding groove 1141a in a second direction, so that the first rotation center O1 and the second rotation center O2 do not overlap. Correspondingly, the second rotating element 113b may specifically include a third arc-shaped rotating block and a fourth arc-shaped rotating block that are fastened to each other. Both a concave surface of the third arc-shaped rotating block and a concave surface of the fourth arc-shaped rotating block are provided toward the side of the flexible display 12. A third arc-shaped guiding groove is provided on a side that is of the base 110 and that faces the second rotating element 113b. A fourth arc-shaped guiding groove is provided on a side that is of the second housing fastening bracket 114b and that faces the second rotating element 113b. Specifically, the third arc-shaped rotating block is accommodated in the third arc-shaped guiding groove, and slides in the third arc-shaped guiding groove to implement a rotatable connection between the second rotating element 113b and the base 110. The fourth arc-shaped rotating block is accommodated in the fourth arc-shaped guiding groove, and slides in the fourth arc-shaped guiding groove to implement a rotatable connection between the second rotating element 113b and the second housing fastening bracket 114b. Specifically, when the hinge mechanism 11 is folded, the third arc-shaped rotating block slides into the third arc-shaped guiding groove, and the fourth arc-shaped rotating block slides into the fourth arc-shaped guiding groove; and when the hinge mechanism 11 is unfolded, the third arc-shaped rotating block slides out of the third arc-shaped guiding groove, and the fourth arc-shaped rotating block slides out of the fourth arc-shaped guiding groove, so that the third rotation center and the fourth rotation center do not overlap.

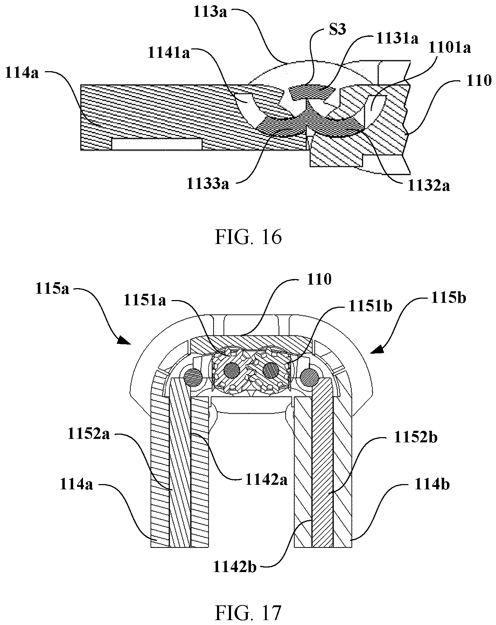

In some other embodiments, when the hinge mechanism is disposed, the first housing fastening bracket 114a, the second housing fastening bracket 114b, and the base 110 may provide support for the flexible display 12, and the first rotating element 113a and the second rotating element 113b may also provide support for the flexible display 12. FIG. 15 is a diagram of another structure of a first rotating element according to an embodiment of this application. FIG. 16 is a diagram of a part of the hinge mechanism in FIG. 9. As shown in FIG. 15 and FIG. 16, specifically, the first rotating element 113a may further include a first body 1131a, and the first arc-shaped rotating block 1132a and the second arc-shaped rotating block 1133a are disposed on a side that is of the first body 1131a and that is away from the flexible display 12. A side that is of the first body 1131a and that faces the flexible display 12 has a first arc-shaped support surface S4, and the first arc-shaped support surface S4 protrudes toward the flexible display 12. Correspondingly, the second rotating element 113b may further include a second body. The third arc-shaped rotating block and the fourth arc-shaped rotating block are disposed on a side that is of the second body and that is away from the flexible display 12. A side that is of the second body and that faces the flexible display 12 has a second arc-shaped support surface S5. As shown in FIG. 11, the second arc-shaped support surface S5 protrudes toward the flexible display 12. When the hinge mechanism 11 is in the flattened state, at least a part of the first arc-shaped support surface S4 may be located in the flat support surface and abut against the flexible display 12, and at least a part of the second arc-shaped support surface S5 may be located in the flat support surface and abut against the flexible display 12. When the hinge mechanism 11 is in the folded state, the first support surface S1, the first arc-shaped support surface S4, the third support surface S3, the second arc-shaped support surface S5, and the second support surface S2 form the U-shaped support surface. In this way, when the hinge mechanism 11 is folded or flattened, the first support surface S1, the first arc-shaped support surface S4, the third support surface S3, the second arc-shaped support surface S5, and the second support surface S2 may jointly support the flexible display 12, to further enhance support for the flexible display 12.

The first support surface S1, the second support surface S2, and the third support surface S3 may be planes. Alternatively, in some other embodiments, the first support surface S1, the second support surface S2, and the third support surface S3 may be arc surfaces. For example, in a specific embodiment, the first support surface S1 may include a first plane and a first arc surface, the first arc surface is provided on a side that is of the first plane and that is close to the first rotating element 113a, and the first arc surface may extend in a direction away from the flexible display 12. Similarly, the second support surface S2 may include a second plane and a second arc surface, the second arc surface is provided on a side that is of the second plane and that is close to the second rotating element 113b, and the second arc surface may extend in a direction away from the flexible display 12. Correspondingly, the third support surface S3 may include a third plane, a third arc surface, and a fourth arc surface, and the third arc surface and the fourth arc surface are respectively located on two sides of the third plane. The third arc surface is provided close to the first rotating element 113a, the fourth arc surface is provided close to the second rotating element 113b, and the third arc surface and the fourth arc surface may separately extend in a direction away from the flexible display 12. In this embodiment, in a process in which the first housing fastening bracket 114a and the second housing fastening bracket 114b are folded or unfolded relative to each other, the first arc surface and the third arc surface may respectively abut against two sides of the first arc-shaped support surface S4, to implement smooth transition of the first support surface S1, the first arc-shaped support surface S4, and the third support surface S3; and the second arc surface and the fourth arc surface respectively abut against two sides of the second arc-shaped support surface S5, to implement smooth transition of the second support surface S2, the second arc-shaped support surface S5, and the third support surface S3. When the hinge mechanism 11 is in the flattened state, the first plane, at least a part of the first arc-shaped support surface S4, the second plane, at least a part of the second arc-shaped support surface S5, and the third plane form the flat support surface; and when the hinge mechanism 11 is in the folded state, the first plane, the first arc surface, the first arc-shaped support surface S4, the third arc surface, the third plane, the fourth arc surface, the second arc-shaped support surface S5, the second arc surface, and the second plane form the U-shaped support surface.

In the foregoing embodiments, the first body 1131a, the first arc-shaped rotating block 1132a, and the second arc-shaped rotating block 1133a may be an integrated structure, to simplify a structure of the first rotating element 113a and improve structural strength of the first rotating element 113a. Certainly, the first body 1131a, the first arc-shaped rotating block 1132a, and the second arc-shaped rotating block 1133a may alternatively be connected in another connection manner such as welding, bonding, or a threaded connection. This is not specifically limited herein.

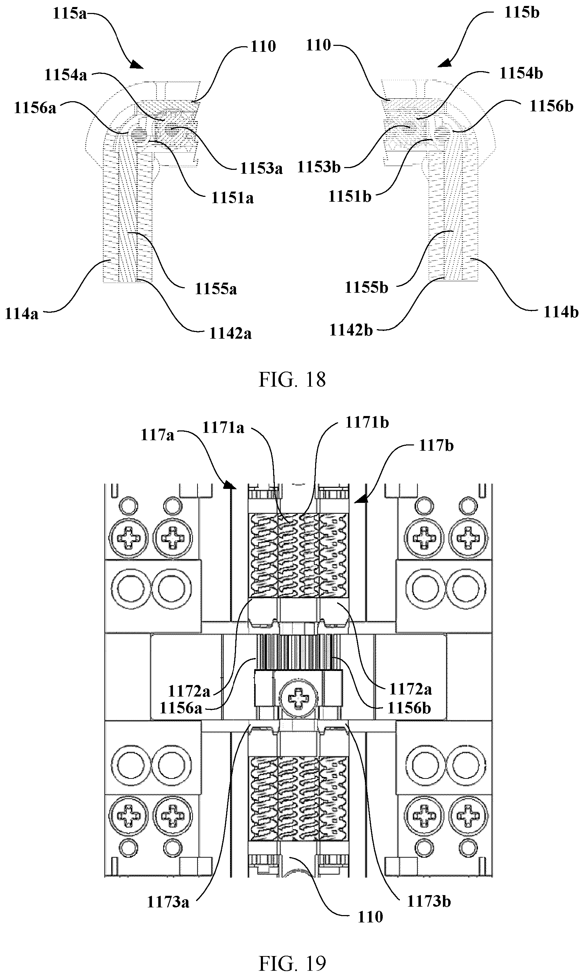

FIG. 17 is a diagram of another structure of a hinge mechanism according to an embodiment of this application. FIG. 18 is a diagram of a part of a hinge mechanism in FIG. 17. As shown in FIG. 17 and FIG. 18, in this application, the hinge assembly 111 may further include a first sliding limiting assembly 115a and a second sliding limiting assembly 115b, to restrict rotation directions and rotation angles of the first housing fastening bracket 114a and the second housing fastening bracket 114b relative to the base 110. The first sliding limiting assembly 115a is connected between the first housing fastening bracket 114a of the first rotating assembly 112a and the base 110, and the second sliding limiting assembly 115b is connected between the second housing fastening bracket 114b of the second rotating assembly 112b and the base 110. The first sliding limiting assembly 115a may include a first limiting gear 1151a and a first limiting gear swing rod 1152a. The first limiting gear 1151a includes a first limiting gear shaft 1153a disposed on the base 110 and a first limiting gear body 1154a sleeved on the first limiting gear shaft 1153a. The first limiting gear swing rod 1152a includes a first limiting sliding block 1155a and a first limiting gear part 1156a, and the first housing fastening bracket 114a is provided with a first limiting chute 1142a extending in a direction away from the base 110. The first limiting sliding block 1155a may be accommodated in the first limiting chute 1142a, and slide in the first limiting chute 1142a to restrict a rotation direction of the first rotating assembly 112a relative to the base 110. The first limiting gear part 1156a is disposed at an end that is of the first limiting sliding block 1155a and that faces the base 110, and meshes with the first limiting gear body 1154a. The second sliding limiting assembly 115b may include a second limiting gear 1151b and a second limiting gear swing rod 1152b. The second limiting gear 1151b includes a second limiting gear shaft 1153b disposed on the base 110 and a second limiting gear body 1154b sleeved on the second limiting gear shaft 1153b. The second limiting gear swing rod 1152b includes a second limiting sliding block 1155b and a second limiting gear part 1156b, and the second housing fastening bracket 114b is provided with a second limiting chute 1142b extending in a direction away from the base 110. The second limiting sliding block 1155b may be accommodated in the second limiting chute 1142b, and slide in the second limiting chute 1142b to restrict a rotation direction of the second rotating assembly 112b relative to the base 110. The second limiting gear part 1156b is disposed at an end that is of the second limiting sliding block 1155b and that faces the base 110, and meshes with the second limiting gear body 1154b. In this embodiment, the first limiting gear body 1154a meshes with the second limiting gear body 1154b. In a process in which the first housing fastening bracket 114a and the second housing fastening bracket 114b are folded or unfolded relative to each other, the first limiting gear body 1154a and the second limiting gear body 1154b may rotate synchronously to drive the first rotating assembly 112a and the second rotating assembly 112b to open and close synchronously, to implement synchronous motion, so that the flexible display 12 is folded or unfolded synchronously and stably on two sides of the base 110.

Still refer to FIG. 7 and FIG. 8. In some embodiments, the hinge assembly 111 may further include a first damping assembly 116a and a second damping assembly 116b. The first damping assembly 116a may include a first spring 1161a, a first moving shaft 1162a, and a first roller 1163a. One end of the first spring 1161a is fastened to the first housing fastening bracket 114a, and the other end is connected to the first moving shaft 1162a. The first roller 1163a is sleeved on the first moving shaft 1162a and may rotate around the first moving shaft 1162a. A first limiting protrusion 1157a is disposed on a side that is of the first limiting sliding block 1155a and that faces the housing fastening bracket 114, and the first limiting protrusion 1157a abuts against a peripheral side of the first roller 1163a. When the first limiting sliding block 1155a slides in the first limiting chute 1142a, the first limiting protrusion 1157a may push the first roller 1163a to rotate, and drive the first moving shaft 1162a to compress the first spring 1161a, to provide a buffer function for sliding of the first limiting sliding block 1155a, so that the first limiting sliding block 1155a slides more smoothly in the first limiting chute 1142a. Similarly, the second damping assembly 116b may include a second spring 1161b, a second moving shaft 1162b, and a second roller 1163b. One end of the second spring 1161b is fastened to the second housing fastening bracket 114b, and the other end is connected to the second moving shaft 1162b. The second roller 1163b is sleeved on the second moving shaft 1162b and may rotate around the second moving shaft 1162b. A second limiting protrusion 1157b is disposed on a side that is of the second limiting sliding block 1155b and that faces the second housing fastening bracket 114b, and the second limiting protrusion 1157b abuts against a peripheral side of the second roller 1163b. When the second limiting sliding block 1155b slides in the second limiting chute 1142b, the second limiting protrusion 1157b may push the second roller 1163b to rotate, and drive the second moving shaft 1162b to compress the second spring 1161b, to provide a buffer function for sliding of the second limiting sliding block 1155b, so that the second limiting sliding block 1155b slides more smoothly in the second limiting chute 1142b.

FIG. 19 is a diagram of another structure of a hinge assembly according to an embodiment of this application. As shown in FIG. 19, in some other embodiments, the damping assembly may be alternatively implemented by using another structure. The hinge assembly 111 may further include a third damping assembly 117a and a fourth damping assembly 117b. The third damping assembly 117a includes a third spring 1171a, a first damping cam 1172a, and a second damping cam 1173a. The third spring 1171a is disposed on the base 110, and the first damping cam 1172a is disposed on one end of the third spring 1171a. The second damping cam 1173a is fastened to the first limiting gear part 1156a, and meshes with the first damping cam 1172a. Specifically, the second damping cam 1173a is provided with a protrusion facing the first damping cam 1172a, and the first damping cam 1172a is provided with a recessed part facing the second damping cam 1173a. When the second damping cam 1173a meshes with the first damping cam 1172a, the protrusion of the second damping cam 1173a abuts against the recessed part of the first damping cam 1172a. When the first limiting sliding block 1155a slides in the first limiting chute 1142a, the second damping cam 1173a rotates with the first limiting gear part 1156a, so that the protrusion rotates in the recessed part. In this way, the first damping cam 1172a moves in an axial direction to compress the third spring 1171a, so that the third spring 1171a generates third elastic force, and sliding of the first limiting sliding block 1155a is dampened by using the third elastic force, to provide a buffer function for sliding of the first limiting sliding block 1155a. Similarly, the fourth damping assembly 117b includes a fourth spring 1171b, a third damping cam 1172b, and a fourth damping cam 1173b. The fourth spring 1171b is disposed on the base 110, and the third damping cam 1172b is disposed on one end of the fourth spring 1171b. The fourth damping cam 1173b is fastened to the second limiting gear part 1156b, and meshes with the third damping cam 1172b. Specifically, the fourth damping cam 1173b is provided with a protrusion facing the third damping cam 1172b, and the third damping cam 1172b is provided with a recessed part facing the fourth damping cam 1173b. When the fourth damping cam 1173b meshes with the third damping cam 1172b, the protrusion of the fourth damping cam 1173b abuts against the recessed part of the third damping cam 1172b. When the second limiting sliding block 1155b slides in the second limiting chute 1142b, the fourth damping cam 1173b rotates with the second limiting gear part 1156b, so that the protrusion rotates in the recessed part. In this way, the third damping cam 1172b moves in an axial direction to compress the fourth spring 1171b, so that the fourth spring 1171b generates fourth elastic force, and sliding of the second limiting sliding block 1155b is dampened by using the fourth elastic force, to provide a buffer function for sliding of the second limiting sliding block 1155b.

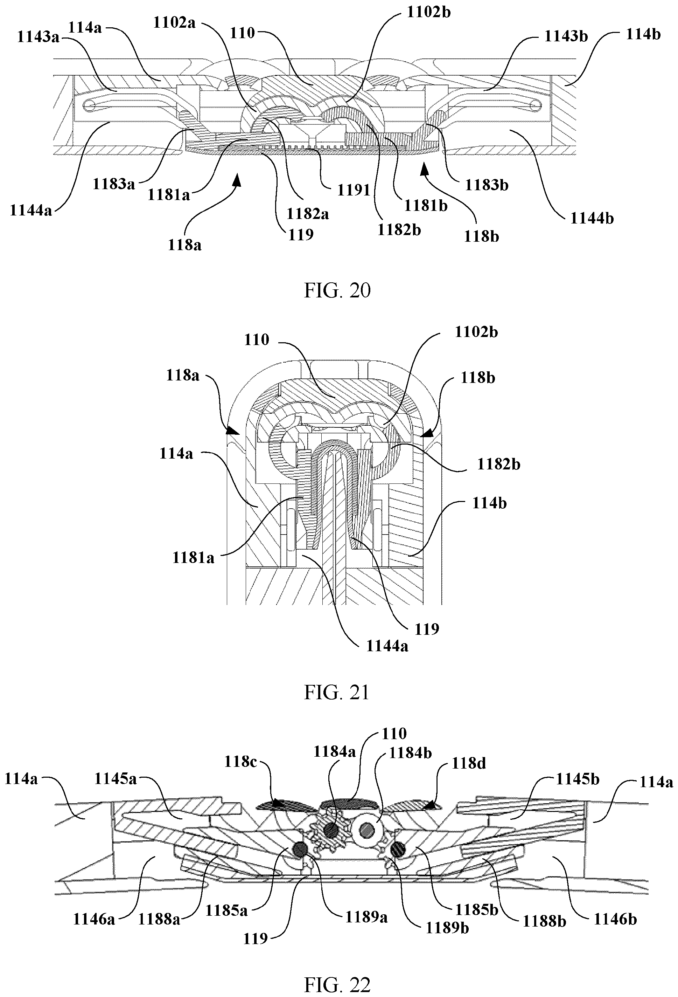

FIG. 20 is a diagram of another structure of a hinge assembly according to an embodiment of this application. FIG. 21 is a diagram of the hinge assembly in FIG. 20 in a closed state. As shown in FIG. 20 and FIG. 21, in some optional embodiments, the hinge mechanism 11 may further include a first backplane support assembly 118a, a second backplane support assembly 118b, and a flexible backplane 119. The flexible backplane 119 shields the base 110 and the hinge assembly 111 by using the first backplane support assembly 118a and the second backplane support assembly 118b. Specifically, the first backplane support assembly 118a may include a fifth arc-shaped rotating block 1182a and a first sliding block 1183a that are fastened to each other. The first sliding block 1183a is disposed close to the first housing fastening bracket 114a, the fifth arc-shaped rotating block 1182a is disposed close to the base 110, and a concave surface of the fifth arc-shaped rotating block 1182a is disposed away from the flexible display 12. The second backplane support assembly 118b includes a sixth arc-shaped rotating block 1182b and a second sliding block 1183b that are fastened to each other. The second sliding block 1183b is disposed close to the second housing fastening bracket 114b, the sixth arc-shaped rotating block 1182b is disposed close to the base 110, and a concave surface of the sixth arc-shaped rotating block 1182b is disposed away from the flexible display 12. In addition, a first guiding groove 1143a is provided on a side that is of the first housing fastening bracket 114a and that is close to the first backplane support assembly 118a, and an end that is of the first guiding groove 1143a and that is away from the base 110 extends along the flexible display 12. A second guiding groove 1143b is provided on a side that is of the second housing fastening bracket 114b and that is close to the second backplane support assembly 118b. An end that is of the second guiding groove 1143b and that is away from the base 110 extends along the flexible display 12. A fifth arc-shaped guiding groove 1102a is provided on a side that is of the base 110 and that is close to the first backplane support assembly 118a. A sixth arc-shaped guiding groove 1102b is provided on a side that is of the base 110 and that is close to the second backplane support assembly 118b. In this embodiment, the first sliding block 1183a is accommodated in the first guiding groove 1143a, and slides in the first guiding groove 1143a to implement a sliding connection between the first backplane support assembly 118a and the first housing fastening bracket 114a. The fifth arc-shaped rotating block 1182a is accommodated in the fifth arc-shaped guiding groove 1102a, and slides in the fifth arc-shaped guiding groove 1102a to implement a rotatable connection between the first backplane support assembly 118a and the base 110. The second sliding block 1183b is accommodated in the second guiding groove 1143b, and slides in the second guiding groove 1143b to implement a sliding connection between the second backplane support assembly 118b and the second housing fastening bracket 114b. The sixth arc-shaped rotating block 1182b is accommodated in the sixth arc-shaped guiding groove 1102b, and slides in the sixth arc-shaped guiding groove 1102b to implement a rotatable connection between the second backplane support assembly 118b and the base 110. The flexible backplane 119 is disposed between the first housing fastening bracket 114a and the second housing fastening bracket 114b, and covers the base 110, the first rotating assembly 112a, the second rotating assembly 112b, the first backplane support assembly 118a, and the second backplane support assembly 118b. The first backplane support assembly 118a and the second backplane support assembly 118b are separately connected to the flexible backplane 119. When the hinge mechanism 11 is in the flattened state, the flexible backplane 119, a surface of a side that is of the first housing fastening bracket 114a and that is away from the flexible display 12, and a surface of a side that is of the second housing fastening bracket 114b and that is away from the flexible display 12 may jointly form the appearance surface, to implement appearance integrity and integrity. A first accommodating cavity 1144a is further provided on a side that is of the first housing fastening bracket 114a and that is close to the flexible backplane 119, and a second accommodating cavity 1144b is provided on a side that is of the second housing fastening bracket 114b and that is close to the flexible backplane 119. Therefore, when the first housing fastening bracket 114a and the second housing fastening bracket 114b are folded relative to each other, the first sliding block 1183a slides in the first guiding groove 1143a in a direction away from the base 110, the fifth arc-shaped rotating block 1182a slides in the fifth arc-shaped guiding groove 1102a in a direction away from the base 110, the second sliding block 1183b slides in the second guiding groove 1143b in a direction away from the base 110, and the sixth arc-shaped rotating block 1182b slides in the sixth arc-shaped guiding groove 1102b in a direction away from the base 110, so that the flexible backplane 119 is folded and two ends of the flexible backplane 119 may respectively extend into the first accommodating cavity 1144a and the second accommodating cavity 1144b, to accommodate the flexible backplane 119.

In some embodiments, the first backplane support assembly 118a may further include a first support plate 1181a. The first sliding block 1183a and the fifth arc-shaped rotating block 1182a are disposed on a side that is of the first support plate 1181a and that faces the flexible display 12. The flexible backplane 119 is connected to a side that is of the first support plate 1181a and that is away from the flexible display 12. The second backplane support assembly 118b may further include a second support plate 1181b. The second sliding block 1183b and the sixth arc-shaped rotating block 1182b are disposed on a side that is of the second support plate 1181b and that faces the flexible display 12. The flexible backplane 119 is connected to a side that is of the second support plate 1181b and that is away from the flexible display 12. When the flexible backplane 119 is bent, a surface that is of the flexible backplane 119 and that is away from the base 110 is closer to a curvature center than a surface that is of the flexible backplane 119 and that faces the base 110, so that pulling force exerted on the surface that is of the flexible backplane 119 and that faces the base 110 is greater than pulling force exerted on the surface that is of the flexible backplane 119 and that is away from the base 110. A blind hole structure 1191 is disposed on a surface of a side that is of the flexible backplane 119 and that faces the flexible display 12. The blind hole structure 1191 is located between the first support plate 1181a and the second support plate 1181b, so that surface stress distribution of the flexible backplane 119 can be improved, and bending resistance of the flexible backplane 119 can be improved. Specifically, when the hinge mechanism 11 is in the closed state, the first support plate 1181a, the second support plate 1181b, the first housing fastening bracket 114a, the second housing fastening bracket 114b, and the base 110 can form water drop-like accommodating space that meets a bending requirement of the flexible backplane 119, to avoid pulling or compression the flexible backplane 119, so as to reduce a risk of damage to the flexible backplane 119.

In the foregoing embodiments, the first support plate 1181a, the fifth arc-shaped rotating block 1182a, and the first sliding block 1183a may be an integrated structure, to simplify a structure of the first backplane support assembly 118a and improve structural strength of the first backplane support assembly 118a. Certainly, the first support plate 1181a, the fifth arc-shaped rotating block 1182a, and the first sliding block 1183a may alternatively be connected in another connection manner such as welding, bonding, or a threaded connection. This is not specifically limited herein. The second support plate 1181b, the sixth arc-shaped rotating block 1182b, and the second sliding block 1183b may also be disposed in a similar manner. Details are not described herein again.

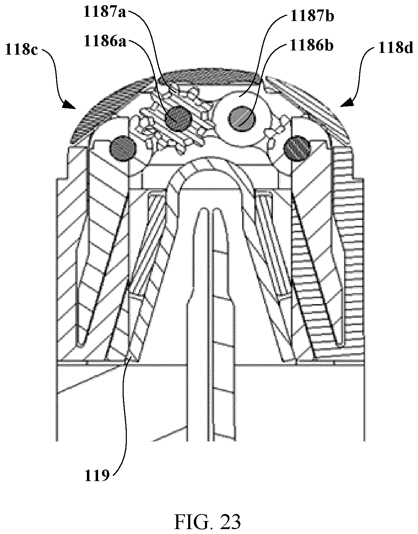

In some other optional embodiments, the backplane support assembly may alternatively be implemented in another manner. FIG. 22 is a diagram of another structure of a hinge assembly according to an embodiment of this application. FIG. 23 is a diagram of the hinge assembly in FIG. 22 in a closed state. As shown in FIG. 22 and FIG. 23, the hinge mechanism 11 may further include the flexible backplane 119, a third backplane support assembly 118c, and a fourth backplane support assembly 118d. The third backplane support assembly 118c includes a third rotating gear 1184a and a third rotating gear swing rod 1185a. The third rotating gear 1184a includes a third rotating gear shaft 1186a disposed on the base 110 and a third rotating gear body 1187a sleeved on the third rotating gear shaft 1186a. The third rotating gear swing rod 1185a includes a third swing rod sliding block 1188a and a third swing rod gear part 1189a. A third guiding groove 1145a is provided on a side that is of the first housing fastening bracket 114a and that faces the third backplane support assembly 118c, and an end that is of the third guiding groove 1145a and that is away from the base 110 extends along the flexible display 12. The third swing rod sliding block 1188a is accommodated in the third guiding groove 1145a. The third swing rod gear part 1189a is disposed at an end that is of the third swing rod sliding block 1188a and that faces the base 110, and meshes with the third rotating gear body 1187a. The fourth backplane support assembly 118d includes a fourth rotating gear 1184b and a fourth rotating gear swing rod 1185b. The fourth rotating gear 1184b includes a fourth rotating gear shaft 1186b disposed on the base 110 and a fourth rotating gear body 1187b sleeved on the fourth rotating gear shaft 1186b. The fourth rotating gear swing rod 1185b includes a fourth swing rod sliding block 1188b and a fourth swing rod gear part 1189b. A fourth guiding groove 1145b is provided on a side that is of the second housing fastening bracket 114b and that faces the fourth backplane support assembly 118d, and an end that is of the fourth guiding groove 1145b and that is away from the base 110 extends along the flexible display 12. The fourth swing rod sliding block 1188b is accommodated in the fourth guiding groove 1145b. The fourth swing rod gear part 1189b is disposed at an end that is of the fourth swing rod sliding block 1188b and that faces the base 110, and meshes with the fourth rotating gear body 1187b. The flexible backplane 119 is disposed between the first housing fastening bracket 114a and the second housing fastening bracket 114b, and covers the base 110, the first rotating assembly 112a, the second rotating assembly 112b, the third backplane support assembly 118c, and the fourth backplane support assembly 118d. The third backplane support assembly 118c and the fourth backplane support assembly 118d are separately connected to the flexible backplane 119. A third accommodating cavity 1146a is further provided on a side that is of the first housing fastening bracket 114a and that is close to the flexible backplane 119, and a fourth accommodating cavity 1146b is provided on a side that is of the second housing fastening bracket 114b and that is close to the flexible backplane 119. When the first housing fastening bracket 114a and the second housing fastening bracket 114b are folded relative to each other, the third swing rod sliding block 1188a slides in the third guiding groove 1145a in a direction away from the base 110, and the fourth swing rod sliding block 1188b slides in the fourth guiding groove 1145b in a direction away from the base 110, so that the flexible backplane 119 is folded and two ends of the flexible backplane 119 respectively extend into the third accommodating cavity 1146a and the fourth accommodating cavity 1146b.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A hinge mechanism, used in a foldable electronic device, wherein the hinge mechanism comprises a base and at least one hinge assembly, wherein
the hinge assembly comprises a first rotating assembly and a second rotating assembly, and the first rotating assembly and the second rotating assembly are disposed opposite to each other on two sides of the base;
the first rotating assembly comprises a first rotating element and a first housing fastening bracket, the first rotating element is located between the base and the first housing fastening bracket and is rotatably connected to the base and the first housing fastening bracket separately, the second rotating assembly comprises a second rotating element and a second housing fastening bracket, and the second rotating element is located between the base and the second housing fastening bracket and is rotatably connected to the base and the second housing fastening bracket separately;
a flexible display of the electronic device is disposed on one side of the hinge mechanism, a side that is of the first housing fastening bracket and that faces the flexible display has a first support surface, a side that is of the second housing fastening bracket and that faces the flexible display has a second support surface, a side that is of the base and that faces the flexible display has a third support surface, and the first support surface, the second support surface, and the third support surface are separately connected to the flexible display; and
when the hinge mechanism is in a flattened state, the first support surface, the second support surface, and the third support surface form a flat support surface for supporting the flexible display; and when the hinge mechanism is in a folded state, the first support surface, the third support surface, and the second support surface form a U-shaped support surface for supporting the flexible display.

2. The hinge mechanism according to claim 1, wherein the first rotating element comprises a first arc-shaped rotating block and a second arc-shaped rotating block that are fastened to each other, both a concave surface of the first arc-shaped rotating block and a concave surface of the second arc-shaped rotating block are provided toward one side of the flexible display, a first arc-shaped guiding groove is provided on a side that is of the base and that faces the first rotating element, and a second arc-shaped guiding groove is provided on a side that is of the first housing fastening bracket and that faces the first rotating element;
the first arc-shaped rotating block is accommodated in the first arc-shaped guiding groove, and slides in the first arc-shaped guiding groove to implement a rotatable connection between the first rotating element and the base; the second arc-shaped rotating block is accommodated in the second arc-shaped guiding groove, and slides in the second arc-shaped guiding groove to implement a rotatable connection between the first rotating element and the first housing fastening bracket; and the first arc-shaped rotating block and the first arc-shaped guiding groove have a first rotation center, the second arc-shaped rotating block and the second arc-shaped guiding groove have a second rotation center, and the first rotation center and the second rotation center do not overlap;
the second rotating element comprises a third arc-shaped rotating block and a fourth arc-shaped rotating block that are fastened to each other, both a concave surface of the third arc-shaped rotating block and a concave surface of the fourth arc-shaped rotating block are provided toward one side of the flexible display, a third arc-shaped guiding groove is provided on a side that is of the base and that faces the second rotating element, and a fourth arc-shaped guiding groove is provided on a side that is of the second housing fastening bracket and that faces the second rotating element; and
the third arc-shaped rotating block is accommodated in the third arc-shaped guiding groove, and slides in the third arc-shaped guiding groove to implement a rotatable connection between the second rotating element and the base; the fourth arc-shaped rotating block is accommodated in the fourth arc-shaped guiding groove, and slides in the fourth arc-shaped guiding groove to implement a rotatable connection between the second rotating element and the second housing fastening bracket; and the third arc-shaped rotating block and the third arc-shaped guiding groove have a third rotation center, the fourth arc-shaped rotating block and the fourth arc-shaped guiding groove have a fourth rotation center, and the third rotation center and the fourth rotation center do not overlap.

3. The hinge mechanism according to claim 2, wherein the first rotating element further comprises a first body, the first arc-shaped rotating block and the second arc-shaped rotating block are disposed on a side that is of the first body and that is away from the flexible display, a side that is of the first body and that faces the flexible display has a first arc-shaped support surface, and the first arc-shaped support surface protrudes toward the flexible display;
the second rotating element further comprises a second body, the third arc-shaped rotating block and the fourth arc-shaped rotating block are disposed on a side that is of the second body and that is away from the flexible display, a side that is of the second body and that faces the flexible display has a second arc-shaped support surface, and the second arc-shaped support surface protrudes toward the flexible display; and
when the hinge mechanism is in the flattened state, at least a part of the first arc-shaped support surface is located in the flat support surface and abuts against the flexible display, and at least a part of the second arc-shaped support surface is located in the flat support surface and abuts against the flexible display; and when the hinge mechanism is in the folded state, the first support surface, the first arc-shaped support surface, the third support surface, the second arc-shaped support surface, and the second support surface form the U-shaped support surface.

4. The hinge mechanism according to claim 3, wherein the first support surface comprises a first plane and a first arc surface, the first arc surface is provided on a side that is of the first plane and that is close to the first rotating element, and the first arc surface extends in a direction away from the flexible display;
the second support surface comprises a second plane and a second arc surface, the second arc surface is provided on a side that is of the second plane and that is close to the second rotating element, and the second arc surface extends in a direction away from the flexible display;
the third support surface comprises a third plane, a third arc surface, and a fourth arc surface, the third arc surface and the fourth arc surface are respectively located on two sides of the third plane, the third arc surface is provided close to the first rotating element, the fourth arc surface is provided close to the second rotating element, and the third arc surface and the fourth arc surface separately extend in a direction away from the flexible display;
in a process in which the first housing fastening bracket and the second housing fastening bracket are folded or unfolded relative to each other, the first arc surface and the third arc surface respectively abut against two sides of the first arc-shaped support surface, and the second arc surface and the fourth arc surface respectively abut against two sides of the second arc-shaped support surface; and
when the hinge mechanism is in the flattened state, the first plane, at least a part of the first arc-shaped support surface, the second plane, at least a part of the second arc-shaped support surface, and the third plane form the flat support surface; and when the hinge mechanism is in the folded state, the first plane, the first arc surface, the first arc-shaped support surface, the third arc surface, the third plane, the fourth arc surface, the second arc-shaped support surface, the second arc surface, and the second plane form the U-shaped support surface.

5. The hinge mechanism according to any one of claims 1 to 4, wherein the hinge assembly further comprises a first sliding limiting assembly and a second sliding limiting assembly, the first sliding limiting assembly is connected between the first housing fastening bracket and the base, and the second sliding limiting assembly is connected between the second housing fastening bracket and the base;
the first sliding limiting assembly comprises a first limiting gear and a first limiting gear swing rod, wherein the first limiting gear comprises a first limiting gear shaft disposed on the base and a first limiting gear body sleeved on the first limiting gear shaft, the first limiting gear swing rod comprises a first limiting sliding block and a first limiting gear part, the first housing fastening bracket is provided with a first limiting chute extending in a direction away from the base, the first limiting sliding block is accommodated in the first limiting chute, the first limiting gear part is disposed at an end that is of the first limiting sliding block and that faces the base, and meshes with the first limiting gear body, and the first limiting sliding block slides in the first limiting chute to restrict a rotation direction of the first rotating assembly relative to the base; and
the second sliding limiting assembly comprises a second limiting gear and a second limiting gear swing rod, wherein the second limiting gear comprises a second limiting gear shaft disposed on the base and a second limiting gear body sleeved on the second limiting gear shaft, the second limiting gear body meshes with the first limiting gear body, the second limiting gear swing rod comprises a second limiting sliding block and a second limiting gear part, the second housing fastening bracket is provided with a second limiting chute extending in a direction away from the base, the second limiting sliding block is accommodated in the second limiting chute, the second limiting gear part is disposed at an end that is of the second limiting sliding block and that faces the base, and meshes with the second limiting gear body, and the second limiting sliding block slides in the second limiting chute to restrict a rotation direction of the second rotating assembly relative to the base.

6. The hinge mechanism according to claim 5, wherein the hinge assembly further comprises a first damping assembly and a second damping assembly;
the first damping assembly comprises a first spring, a first moving shaft, and a first roller, one end of the first spring is fastened to the first housing fastening bracket, the other end is connected to the first moving shaft, the first roller is sleeved on the first moving shaft and may rotate around the first moving shaft, the first limiting sliding block is provided with a first limiting protrusion, the first limiting protrusion abuts against a peripheral side of the first roller, and when the first limiting sliding block slides in the first limiting chute, the first limiting protrusion pushes the first roller to rotate, and drives the first moving shaft to compress the first spring, so that the first spring generates first elastic force, and sliding of the first limiting sliding block is dampened by using the first elastic force; and
the second damping assembly comprises a second spring, a second moving shaft, and a second roller, one end of the second spring is fastened to the second housing fastening bracket, the other end is connected to the second moving shaft, the second roller is sleeved on the second moving shaft and may rotate around the second moving shaft, the second limiting sliding block is provided with a second limiting protrusion, the second limiting protrusion abuts against a peripheral side of the second roller, and when the second limiting sliding block slides in the second limiting chute, the second limiting protrusion pushes the second roller to rotate, and drives the second moving shaft to compress the second spring, so that the second spring generates second elastic force, and sliding of the second limiting sliding block is dampened by using the second elastic force.

7. The hinge mechanism according to claim 5, wherein the hinge assembly further comprises a third damping assembly and a fourth damping assembly;
the third damping assembly comprises a third spring, a first damping cam, and a second damping cam, the third spring is disposed on the base, the first damping cam is disposed on one end of the third spring, the second damping cam is fastened to the first limiting gear part and meshes with the first damping cam, and when the first limiting sliding block slides in the first limiting chute, the second damping cam pushes the first damping cam and compresses the third spring, so that the third spring generates third elastic force, and sliding of the first limiting sliding block is dampened by using the third elastic force; and
the fourth damping assembly comprises a fourth spring, a third damping cam, and a fourth damping cam, the fourth spring is disposed on the base, the third damping cam is disposed on one end of the fourth spring, the fourth damping cam is fastened to the second limiting gear part and meshes with the third damping cam, and when the second limiting sliding block slides in the second limiting chute, the fourth damping cam pushes the third damping cam and compresses the fourth spring, so that the fourth spring generates fourth elastic force, and sliding of the second limiting sliding block is dampened by using the fourth elastic force.

8. The hinge mechanism according to any one of claims 1 to 7, wherein the hinge mechanism further comprises a first flexible backplane, a first backplane support assembly, and a second backplane support assembly;
the first backplane support assembly comprises a first sliding block and a fifth arc-shaped rotating block that are fastened to each other, wherein the first sliding block is disposed close to the first housing fastening bracket, the fifth arc-shaped rotating block is disposed close to the base, and a concave surface of the fifth arc-shaped rotating block is provided away from the flexible display;
the second backplane support assembly comprises a second sliding block and a sixth arc-shaped rotating block that are fastened to each other, wherein the second sliding block is disposed close to the second housing fastening bracket, the sixth arc-shaped rotating block is disposed close to the base, and a concave surface of the sixth arc-shaped rotating block is provided away from the flexible display;
a first guiding groove is provided on a side that is of the first housing fastening bracket and that is close to the first backplane support assembly, an end that is of the first guiding groove and that is away from the base extends along the flexible display, a second guiding groove is provided on a side that is of the second housing fastening bracket and that is close to the second backplane support assembly, an end that is of the second guiding groove and that is away from the base extends along the flexible display, a fifth arc-shaped guiding groove is provided on a side that is of the base and that is close to the first backplane support assembly, and a sixth arc-shaped guiding groove is provided on a side that is of the base and that is close to the second backplane support assembly;
the first sliding block is accommodated in the first guiding groove, and slides in the first guiding groove to implement a sliding connection between the first backplane support assembly and the first housing fastening bracket; the fifth arc-shaped rotating block is accommodated in the fifth arc-shaped guiding groove, and slides in the fifth arc-shaped guiding groove to implement a rotatable connection between the first backplane support assembly and the base; the second sliding block is accommodated in the second guiding groove, and slides in the second guiding groove to implement a sliding connection between the second backplane support assembly and the second housing fastening bracket; and the sixth arc-shaped rotating block is accommodated in the sixth arc-shaped guiding groove, and slides in the sixth arc-shaped guiding groove to implement a rotatable connection between the second backplane support assembly and the base;
the first flexible backplane is disposed between the first housing fastening bracket and the second housing fastening bracket, and covers the base, the first rotating assembly, the second rotating assembly, the first backplane support assembly, and the second backplane support assembly, and the first backplane support assembly and the second backplane support assembly are separately connected to the first flexible backplane;
a first accommodating cavity is further provided on a side that is of the first housing fastening bracket and that is close to the first flexible backplane, and a second accommodating cavity is provided on a side that is of the second housing fastening bracket and that is close to the first flexible backplane; and
in a process in which the first housing fastening bracket and the second housing fastening bracket are folded relative to each other, the first sliding block slides in the first guiding groove in a direction away from the base, the fifth arc-shaped rotating block slides in the fifth arc-shaped guiding groove in a direction away from the base, the second sliding block slides in the second guiding groove in a direction away from the base, and the sixth arc-shaped rotating block slides in the sixth arc-shaped guiding groove in a direction away from the base, so that the first flexible backplane is folded and two ends of the first flexible backplane respectively extend into the first accommodating cavity and the second accommodating cavity.

9. The hinge mechanism according to claim 8, wherein the first backplane support assembly further comprises a first support plate, the first sliding block and the fifth arc-shaped rotating block are disposed on a side that is of the first support plate and that faces the flexible display, and the first flexible backplane is connected to a side that is of the first support plate and that is away from the flexible display;
the second backplane support assembly further comprises a second support plate, the second sliding block and the sixth arc-shaped rotating block are disposed on a side that is of the second support plate and that faces the flexible display, and the first flexible backplane is connected to a side that is of the second support plate and that is away from the flexible display; and
a blind hole structure is provided on a surface of a side that is of the first flexible backplane and that faces the flexible display, and the blind hole structure is located between the first support plate and the second support plate.

10. The hinge mechanism according to any one of claims 1 to 7, wherein the hinge mechanism further comprises a second flexible backplane, a third backplane support assembly, and a fourth backplane support assembly;
the third backplane support assembly comprises a third rotating gear and a third rotating gear swing rod, wherein the third rotating gear comprises a third rotating gear shaft disposed on the base and a third rotating gear body sleeved on the third rotating gear shaft, the third rotating gear swing rod comprises a third swing rod sliding block and a third swing rod gear part, a third guiding groove is provided on a side that is of the first housing fastening bracket and that faces the third backplane support assembly, an end that is of the third guiding groove and that is away from the base extends along the flexible display, the third swing rod sliding block is accommodated in the third guiding groove, and the third swing rod gear part is disposed at an end that is of the third swing rod sliding block and that faces the base, and meshes with the third rotating gear body;
the fourth backplane support assembly comprises a fourth rotating gear and a fourth rotating gear swing rod, wherein the fourth rotating gear comprises a fourth rotating gear shaft disposed on the base and a fourth rotating gear body sleeved on the fourth rotating gear shaft, the fourth rotating gear swing rod comprises a fourth swing rod sliding block and a fourth swing rod gear part, a fourth guiding groove is provided on a side that is of the second housing fastening bracket and that faces the fourth backplane support assembly, an end that is of the fourth guiding groove and that is away from the base extends along the flexible display, the fourth swing rod sliding block is accommodated in the fourth guiding groove, and the fourth swing rod gear part is disposed at an end that is of the fourth swing rod sliding block and that faces the base, and meshes with the fourth rotating gear body;
the second flexible backplane is disposed between the first housing fastening bracket and the second housing fastening bracket, and covers the base, the first rotating assembly, the second rotating assembly, the third backplane support assembly, and the fourth backplane support assembly, and the third backplane support assembly and the fourth backplane support assembly are separately connected to the second flexible backplane; and
a third accommodating cavity is further provided on a side that is of the first housing fastening bracket and that is close to the second flexible backplane, and a fourth accommodating cavity is provided on a side that is of the second housing fastening bracket and that is close to the second flexible backplane; and in a process in which the first housing fastening bracket and the second housing fastening bracket are folded relative to each other, the third swing rod sliding block slides in the third guiding groove in a direction away from the base, and the fourth swing rod sliding block slides in the fourth guiding groove in a direction away from the base, so that the second flexible backplane is folded and two ends of the second flexible backplane respectively extend into the third accommodating cavity and the fourth accommodating cavity.

11. An electronic device, comprising a flexible display and the hinge mechanism according to any one of claims 1 to 10, wherein the flexible display is disposed on one side of the hinge mechanism, and is connected to the first support surface, the second support surface, and the third support surface.
